**Europäisches Patentamt**

(19) **European Patent Office**

**Office européen des brevets**

(11) Publication number: **0 012 028**
**B1**

(12) **EUROPEAN PATENT SPECIFICATION**

(45) Date of publication of patent specification: **25.05.83**

(21) Application number: **79302745.9**

(22) Date of filing: **30.11.79**

(51) Int. Cl.³: **F 24 J 3/02**

(54) **Solar energy collector assembly.**

(30) Priority: **01.12.78 US 965618**
**11.10.79 US 83961**

(43) Date of publication of application:
**11.06.80 Bulletin 80/12**

(45) Publication of the grant of the patent:
**25.05.83 Bulletin 83/21**

(84) Designated Contracting States:
**AT BE CH DE FR GB IT LU NL SE**

(56) References cited:
**DE - A - 2 608 302**
**DE - A - 2 700 714**
**FR - A - 2 280 867**
**FR - A - 2 330 972**
**US - A - 3 146 774**
**US - A - 3 174 915**
**US - A - 4 036 209**
**US - A - 4 096 850**

(73) Proprietor: **Larsen, Raymond Barber**
**79 Bolsa**
**Mill Valley, California 94941 (US)**

(72) Inventor: **Larsen, Raymond Barber**
**79 Bolsa**
**Mill Valley, California 94941 (US)**

(74) Representative: **Bayliss, Geoffrey Cyril et al,**
**BOULT, WADE & TENNANT 27 Furnival Street**
**London EC4A 1PQ (GB)**

Courier Press, Leamington Spa, England.

Solar energy collector assembly

This invention relates to solar energy collector assemblies which may be used in various different industrial and residential applications, such as, for example, greenhouses, swimming pools, residential or business establishments.

Notwithstanding the ever increasing activity in the development and use of solar energy as a source of heat, major detriments in such systems insofar as consumer acceptance is concerned are their initial cost of manufacture and installation, size, durability and weight for a given amount of heat transfer, and the ability to rapidly heat the heat transfer medium to the desired temperature: or in other words, to achieve maximum absorption of solar energy from the collector into the heat transfer medium.

A number of solar energy collector assemblies have been devised utilizing flexible plastic materials both in the formation of the collector and transparent surface. Representative of such systems are United States Letters Patent Nos. 3,022,781, to Andrassy; 3,029,806 to Okuda, 3,174,915 to Edlin; 3,513,828 to Masters; 3,991,741 to Gerber and 4,036,209 to Press and German DE—A—2 608 302 to Schwarz. For instance, the patent to Okuda discloses a plastic solar water heater which is inflated by water pressure when in use and provided with outer reinforcing along its edges. Edlin is directed more to an air supported solar still with an extrusion adapted to support a canopy and to collect the distillate, and edge sealing members extend along the length and sides of the still. Similarly, Masters is directed to a flexible, bag-like solar water heater utilizing pillow-like inflatable elements with a water inlet at one end having longitudinally spaced apertures for directing water into the space between the base and central sheets together with longitudinally spaced, laterally extending partitions also having spaced water conducting apertures. Gerber also employs flexible plastic bag sections with water distribution and collection troughs, and is directed in essence to the utilization of an uneven or irregular surfaced fluid spreader sheet for creating turbulence in the flow of water in order to wet substantially all of the upper and lower panel assemblies. Press is directed to a solar collector assembly including at least one wall made of pliable, polymeric film forming with another wall a thin passageway. In another embodiment the collector assembly includes cooperating sheets sealed to one another at their edges and defining a water passage and a pair of air cushions. Schwarz shows flexible sheets supported by a frame which comprises rods extending through loops formed at the sides.

In a publication entitled "The Rutgers Solar Heating System for Greenhouses", Paper no. 79—4009, dated June 26—29, David R. Mears et al. described a system in which air-inflated tubes press against a plastic collector sheet and water is passed through a perforated header along the surface of the collector sheet to recover the heat-absorbed by the sheet.

To the best of my knowledge, however, the above and other prior art systems fail to make adequate provision for any means of supporting the flexible sheets comprising the collector and transparent layers in predetermined spaced-apart relation and in such a way that the spacing may be closely regulated notwithstanding the breadth or size of the assembly. Moreover, there is a need for a positive but releasable edge sealing arrangement which will assure not only the desired spacing between layers but the proper tension or tautness of the sheet in order to carry out the principles of my invention. Specifically, a vastly improved means of heat or energy transfer has been realized by the uniform flow of water in direct contact with the collector surface and where the water is evenly distributed across the entire surface by choosing a predetermined pressure and tautness of the air cushion layers which are disposed along the top and undersides of the collector sheet.

An object of the present invention is to provide a solar energy collector assembly which is low in cost, easy to install and extremely efficient to operate.

The invention provides a solar energy collector assembly comprising a collector sheet, an intermediate sheet disposed in closely spaced relation to said collector sheet and being co-extensive with and substantially parallel to said collector sheet, water distribution means for evenly distributing water between said collector sheet and said intermediate sheet, a first air distribution sheet disposed in closely spaced relation to said collector sheet and being co-extensive with and substantially parallel to that sheet, a second air distribution sheet disposed in closely spaced relationship to the intermediate sheet and being co-extensive with and substantially parallel to that sheet, the collector, intermediate and air distribution sheets being sealed at their edges, air supply means isolated from said water distribution means for passing air under pressure between the two air distribution sheets and the respective adjacent sheets to maintain said sheets at a predetermined pressure whereby water is caused to flow in a thin film evenly past the face of the collector sheet for recovery of heat from the collector sheet and recovery means for removing the fluid after it has passed said collector sheet characterised in that an outer peripheral frame is provided and the collector sheet, intermediate sheet and the air distribution sheets are independently secured and sealed at their edges to said frame in predetermined spaced apart relationship and under predetermined tension, and in that the air supply means are associated with said frame.

The solar collector assembly according to the invention is extremely low in cost to manufacture and install, may be constructed over a wide range of sizes depending upon its intended use, application and capacity while maintaining the integrity of the system; and further to provide a system which is readily conformable for numerous different applications and can be installed in different locations, such as, by mounting directly to the wall or roof of a building to be heated or as a self-supporting or stand-alone structure apart from the building or area to be heated.

In accordance with the present invention, a preferred embodiment is broadly characterized by a taut flexible collector sheet which closely spaced with respect to a taut flexible sheet to form a fluid passage and flexible air distribution layers which exert a predetermined pressure against the spaced sheets to urge them against the heat transfer medium, such as water as it passes in contact with the collector sheet. In this way water will be directed by gravity along and in contact with the collector sheet in a relatively thin, uniform flow across the entire surface of the collector sheet. Relatively high convective heat transfer between the collector sheet and the water film will occur to most efficiently recover heat absorbed by the sheet. In order to maintain a predetermined tension and spacing between the inner collector and adjacent sheet and outer sheets which form together with the inner sheets air distribution layers, a unique outer frame has been devised which has inwardly tilted channels adapted to receive double wedge connectors to releasably secure the outer peripheral edges of the sheets in their respective channels. The double wedge connectors include an outer wedge portion to permit preliminary positioning of the sheets and an inner wedge which tightens and positively secures the sheets in sealed relation within the channels once the desired spacing and tension has been established by the outer wedge connector. Even in the absence of air pressure, the tension in the layers is such as to minimize contact between them. The outer frame defining the channels is preferably in the form of an aluminum extrusion which provides channels not only for placement of sheets defining the collector and air distribution layers but also the necessary inlets and drains for passage of water in contact with the collector surface and the passage of air under predetermined pressure into the air distribution layers.

Preferably the collector sheet is a flexible plastic film coated with a radiation absorbing black paint or pigment and forms together with a cooperation upper sheet air distribution layer. A second air distribution layer is composed of two plastic films one of which cooperates with film. Air under pressure is directed into the air distribution layers. By maintaining a predetermined degree of tension or tautness in the collector layer and adjacent layer and air pressure in the air distribution layers, the water passing over the collector surface will be reduced to an extremely thin film of even thickness so as to achieve maximum heat absorption from the collector.

The above and other objects, advantages and features of the present invention will become more readily apparent when taken together with the following detailed description of the preferred embodiment in conjunction with the figure description, in which:

Figure 1 is a perspective view of a preferred form of solar collector system in accordance with the present invention.

Figure 2 is a cross-sectional view taken transversely of the length of the system shown in Figure 1.

Figure 3 is a cross-sectional view taken along the length of the system as shown in Figure 1.

Figure 4 is a somewhat fragmentary detailed perspective view illustrating the water inlet side of the frame assembly.

Figure 5 is an exploded, perspective view of the preferred form of frame assembly.

Figure 6 is a fragmentary perspective view in detail showing the water discharge side of the frame assembly.

Figure 7 is a cross-sectional view through the frame proper illustrating the construction of the frame and the relationship of the wedge connectors when fully seated in the channels of the frame.

Figure 8 is a cross-sectional view illustrating in more detail the frame assembly and preferred form of wedge connectors employed in cooperation with the frame in securing the peripheral edges of the collector sheet and air distribution layers to the frame.

Figure 9 is an exploded fragmentary view illustrating the preferred form of wedge connectors employed as the edge sealing means of Figure 8; and

Figure 10 is a cross-sectional view of the channel and wedge connector assembly in place.

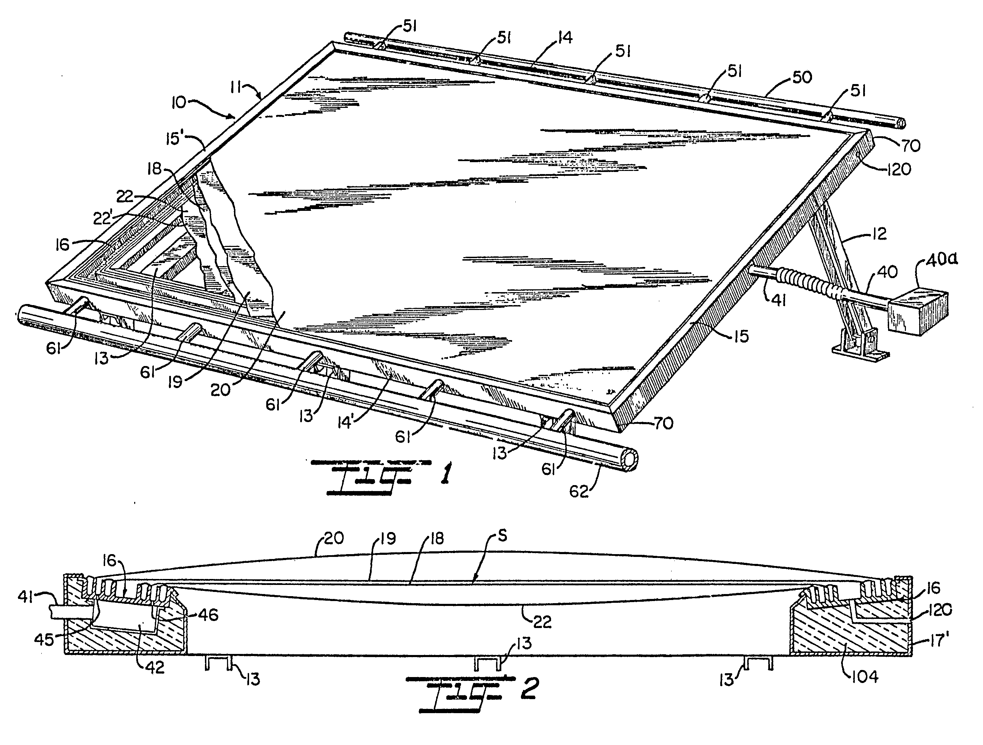

Referring in detail to the drawings, the preferred form of invention is illustrated in Figure 1 as a self-supporting, stand-alone structure in which a solar collector assembly 10 is supported on vertical legs 12 affixed to the two rearwardmost or upper corners of the assembly and horizontal braces or cross members 13 extending at spaced intervals across the width of the assembly. The assembly 10 may be positioned on a suitable foundation or ground surface, not shown, and positioned at the desired angle in accordance with well-known practice to most efficiently recover heat from the sun's rays. Typically, the angle of the assembly would be adjustable to compensate for changes in the angle of the sun above the horizon during the year. In the alternative, the entire assembly as illustrated in Figure 1 may be mounted on a flat roof and the supporting legs 12 firmly affixed in place to the roof; or when used on pitched roofs the frame assembly may be built directly into the roof without the legs 12. At the outset, it will be apparent that the supporting structure employed for the frame assembly 10 is shown in Figure 1 more as a setting for the present invention and that the inventive features of the system are incorporated into the construction and arrangement of elements making up the collector assembly 10.

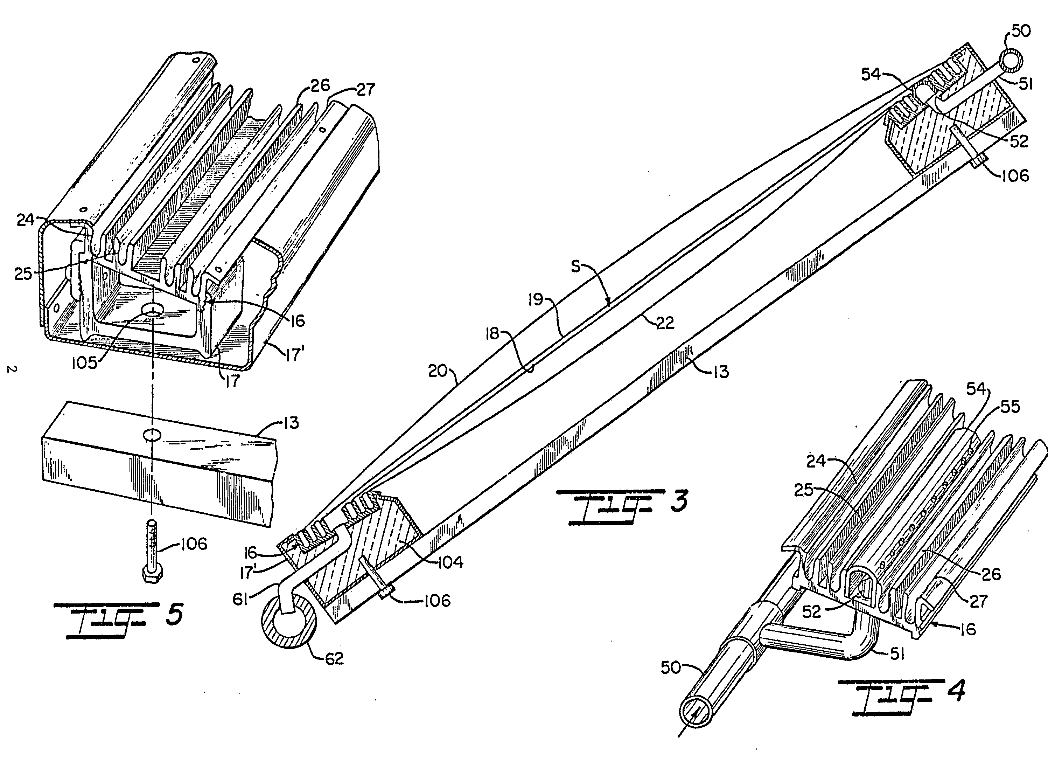

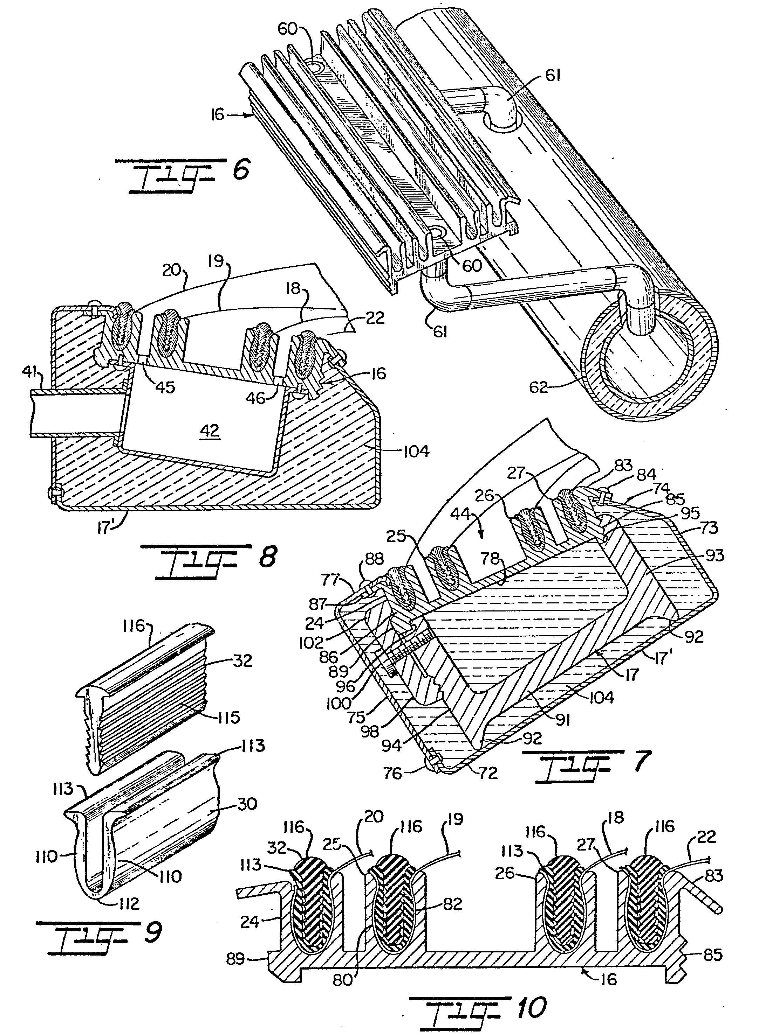

As illustrated in Figures 1 to 6, the preferred form of collector assembly 10 is broadly comprised of an outer generally rectangular frame assembly 11 having opposite side frame members 14 and 14' and opposite end frame members 15 and 15'. As shown in Figures 2 and 3, each frame member 14, 14', 15 and 15' has a channel extrusion 16 tilted inwardly at an acute angle to horizontal by a plurality of support brackets 17, shown in Figure 5, at spaced intervals within an outer insulated housing 17' for the frame. The channel extrusions 16 traverse the entire peripheral extent of the assembly and serve not only as a manifold for introduction and removal of fluid or liquid to and from the assembly, respectively, but also provide the principal means of suspending a series of flexible layers across the entire frame assembly, each layer being of generally rectangular configuration corresponding to the size of the frame assembly 11 and having outer peripheral side and end edges adapted for mounting in the channels of the extrusion 16 for each frame member. Specifically in the preferred embodiment the layers include an upper intermediate or collector sheet or layer 19, operating with upper air distribution sheet or layers 20 and lower intermediate or collector sheet or layer 18 cooperating with a lower air distribution sheet or layer 22. As best seen from Figures 4 to 6, in order to establish a predetermined spacing between the layers each channel extrusion includes a series of parallel channels 24, 25, 26 and 27 which extend the entire length of each frame member, the collector sheet 18 having its outer peripheral end and side edges disposed in the channels 26, the upper layers 19 and 20 having their outer edges disposed in upper channels 24 and 25, and the lower layers 18 and 22 having their outer edges disposed in the lower channels 27.

The securing means provided for joining the collector sheets 18 and 19 and air distribution layers 20 and 22 are preferably defined by wedge connectors as shown in Figures 7 to 9, there being an outer female wedge connector 30 which operates as a means of preliminary location and affixing of the outer peripheral edge of each layer or sheet. An inner male wedge member 32 is then forced down inside the outer wedge in permanently fixing and sealing each respective sheet or layer in place under predetermined tension in a manner hereinafter described in more detail with reference to Figures 7 to 10. The frame assembly is completed by the lower cross members 13, as illustrated in Figures 1 and 3 which extend across the underside of the frame assembly both to unite the frame and can act as a means of attachment, for example, to a sloped roof.

As a preliminary to a more detailed description of the collector assembly 10, referring to Figures 1 and 2, air under pressure is supplied from a blower 13 for the air distribution layers through an inlet hose 40 which through a main air inlet 41 is affixed to one end of the frame assembly and introduces air under pressure through an air plenum 42 which is disposed along the end frame 15 beneath the channel extrusion 16. Plenum 42 directs air through an upper and lower series of openings 42 and 46 in the extrusion 16 into the spaces between the upper air distribution layer 20 and collector sheet 19 and between the lower air distribution layer 22 and collector sheet 18, respectively, to form air cushion layers.

The air or other fluid supplied maintains a slightly positive gauge pressure in the air cushion layers as defined by the upper air distribution layer 20 and collector layer 19 and lower distribution layer 22 in combination with the layer 18 to assure that a uniform space, as designated at S in Figures 2 and 3, is maintained between the collector sheet 19 and layer 18 for the continuous uniform flow of a film of water along the surface of the sheet 18. Preferably the spacing which is maintained between the collector sheet 19 and layer 18 is on the order of .025 cm in establishing a passage for the flow of water or other liquid across the collector surface. In a manner to be hereinafter described, this spacing is maintained through the combined utilization of a predetermined air pressure in the air cushion layers, the tension of the plastic layers, and the spacing between the layers.

The liquid heat transfer medium, preferably water, as shown in Figures 1, 3 and 4, includes an inlet header 50 extending along the upper side frame 14 of the assembly and a plurality of water inlet pipes 51 extending from the header 50 through openings 52 in the channel extrusion 16 and into communication with a water distribution manifold 54. The manifold 54 is defined by an arcuate tubular section composed of a resilient sheet which is bowed into inverted, generally U-shaped configuration so that its free ends can be inserted in the channel extrusion 16 to extend the full length of the upper side frame member 14; and, the manifold 54 has a series of slots or openings 55 along its closed end communicating with the space formed along the one side of the assembly 10 between the collector sheet 19 and the next adjacent layer 18, all as shown in Figures 3 and 4. Figure 6 illustrates the lower side of the collector assembly and the manner in which water passed over the sheet 18 in contact with collector layer 19 is recovered through drain openings 60 and drain spouts 61 into a common drain pipe 62 for removal of the water to a suitable collector tank or water storage area, not shown.

Considering in more detail the mounting and disposition of the channel extrusions 16, it will be noted from Figure 1 that the adjoining corners 70 of the entire frame including the channel extrusions form complementary angles so as to be disposed in abutting relation to one another and are attached by suitable means such as by suitable fasteners, not shown. Each of the channel extrusions 16 along the end and side frame members is sloped inwardly and downwardly toward the center of the assembly at a corresponding angle in the order of 10° to the plane of the panel. This angle is established by the brackets 17 in outer housing 17' which, for example, as seen from Figures 5 and 7 includes a flat bottom wall 72, a relatively short inner sidewall 73 which is bent outwardly at 74, and an outer relatively long sidewall 75 affixed to the bottom wall by suitable fasteners 76 and having a top horizontal wall or cap 77 of limited width. Each channel extrusion is correspondingly formed to include a bottom plate 78 which serves as a common support for the channel members 24 to 27, there being a relatively wide spacing between the innermost channel members 25 and 26 to define the central trough section 44. As shown in Figure 10, it will be noted that each channel 24 to 27 is correspondingly formed to define a relatively narrow entrance 80 merging into a larger generally U-shaped recessed area 82, the channels extending for the full length of the extrusion and being aligned at the corners of the extrusions with the correspondingly channels of the adjoining frame member. As an additional means of attachment and support for the channel extrusions 16 with respect to the housing 17', the inner side of the innermost channel 27 includes a lip 83 which is attached by suitable fasteners 84 to the upper edge of the inclined wall section 74 of the housing; also, the inner sidewall includes external cleats or ribs 85 at its juncture with the bottom support plate 78. Correspondingly, the outer sidewall 86 for the outermost channel 24 is provided with an external lip 87 which is attached by fasteners 88 to the horizontal upper wall 77 of the housing; also, a lower projection 89 extends along the lower edge of the outer sidewall 86 at its juncture with the bottom support plate 78. The ribs 85 and projection 89 provide internal support for the channel extrusions 16 in cooperation with a series of the support brackets 17 which are disposed at spaced intervals along the length of the channel extrusion within each housing 17'. Specifically, each support bracket 17 is of generally U-shaped configuration including a bottom horizontal flange 91 with downwardly projecting feet 92 on opposite sides and inner and outer vertically extending sidewalls 93 and 94, respectively. Inner sidewall has an upper recessed portion 95 provided with a ribbed surface complementary to that of the ribbed surface 85 of the inner sidewalls of the channel extrusion; and the outer wall 94 has an upper recessed portion 96 adapted to receive the projection 89 on the outer sidewall of the channel extrusion 16. The assembly between the channel extrusion and support bracket is completed by a retainer plate 98 which is threadedly connected to the outer sidewall 94 by screw-type connectors 100 and has an inturned upper ledge 102 adapted to bear against the outer sidewall 86 of the channel extrusion directly above the projection 89. Once the assembly of the channel extrusions 16 and support brackets 17 is completed, they are placed within the insulated housing 17' with the feet 92 of the support brackets 17 resting against the bottom wall 72 of the housing, and the lips 83 and 87 are then connected to the upper terminal edges of the housing as earlier described.

The construction of the channel extrusions for each of the end and side frame members is identical; however, each is modified to include different sets of openings according to its intended application. Thus, the inlet openings 52 are formed along the extrusion for the upper side frame member 14 and the drain openings 60 are formed at spaced intervals in the intermediate trough 44 of the lower side frame member 14'; and the openings 45 and 46 are formed at spaced intervals in the channel extrusion for the end frame member 15 to permit the introduction of air into the air cushion layers as described. Furthermore, it will be seen from Figures 2, 3, 7 and 8 that the housing 17' for each of the frame members may be filled with any suitable form of insulation as represented at 104. The support brackets provide an additional means of uniting the entire assembly, as shown in Figures 5 and 7 in bolts 106 extending upwardly through the lower structural frame members 13.

In a preferred installation shown in Figures 1 to 3, the upper air cushion layer is preferably formed of inner collector layer 19 adapted to absorb radiation and having minimum stretchability and upper layer 20 composed of a transparent plastic material having minimum stretchability, the outer layer being on the order of .013 cm thick. The collector sheet or layer 19 is preferably composed of an aluminized flexible low stretchability film, such as, a polyester or Mylar film on the order of .005 cm thick which is covered or coated with a layer of black pigment or paint such as, iron-manganese-copper oxide, on the order of .0005 to .0009 cm thick and which is applied to the film by a suitable binder, such as, an aliphatic urethane or a silicone binder. The collector layer is sufficiently flexible and thin to follow the flow or curtain of water passing along the surface of inner layer 18 to effect and create uniform flow across the entire width of the panel. The inner layer 18 supports the fluid and cooperates with lower cushion layer 22 to form a lower air cushion. This layer is composed of a flexible plastic which is preferably coated with a reflective material on one surface as represented at 22' in Figure 1 facing the inner layers 18 and 19. These layers are similarly on the order of .0025 to .006 cm thick. The layer 18 is preferably formed of, or coated with, a reflective material to reflect infrared rays back to the reflector layer. Air is pumped into the inner and outer cushion layers at a pressure on the order of 9 to 18 grams per square cm gauge and, the constant pressure of air in the cushion layers will encourage even distribution of water film.

As described above, the layers 18 and 19 are taut and spaced closely adjacent one another. The air cushions urge the films 18 and 19 toward one another with predetermined pressure. The fluid flowing between the sheets flows under the action of the tautness of the sheets, the pressure and capillary forces in a thin relatively uniform sheet over the sheet 10 and in contact with sheet 19.

Each of the flexible plastic layers 18, 19, 20, 22 is rectangular in configuration and, proceeding inwardly from the outermost layer 20 to the innermost layer 22, are progressively reduced in size so that their respective outer peripheral edges will be properly aligned with the channels 24 to 27.

The female and male wedge connector assemblies 30 and 32 facilitate attachment of the outer peripheral edges of the layers in place within the frame member. As shown in Figures 8 to 10, wedge connectors 30 and 32 are correspondingly formed to be of a length to extend continuously around the circumference of the entire assembly, and each is composed of a rubber or rubber-like material possessing limited flexibility and resiliency in securing the outer peripheral edges of the layers in place within their respective channels. The female wedge connector 30, as shown in Figure 9, is of generally U-shaped configuration having relatively thick sides 110 joined by a relatively thin lower closed end 112, and upper horizontally tapered ridges 113 extending laterally away from opposite sides 110. The cross-sectional width of the connector 30 including the space between the sides 110 corresponds to or is normally slightly less than the width of the channel so that as a first step in the location of each layer with respect to its channel the connector 30 can be pressed against the flexible layer to urge it downwardly into the channel so as to preliminarily locate and position the layer in place. Once the female wedge connector 30 is fully inserted into the channel any minor adjustment or tightening may be made until the layer is fairly taut and wrinkle-free. Thereupon the male connector 32 is driven into space between the sides 110 of the connector to cause the sides to be expanded outwardly, thereby lengthening the cross-sectional perimeter to exert a slight stretching force upon the layer while firmly bearing against the sides of the channel extrusion 16. Preferably the wedge connector 32 is T-shaped and comprises a ribbed stem 115 which corresponds to the depth of the spacing within the connector 30 and has an enlarged rounded head 116 wider than the space so as to limit the downward insertion of the connector 32 into the connector 30. The ribbed external surface of the connector 32 will minimize frictional resistance of the connector as it is driven downwardly into the connector 30 while assuring a tight fit between the connector elements once the connector 32 is fully inserted along the entire length of the connector 30. The wedge member 32 can be forced into position by manual pressure or with the aid of a hammer by tapping along the upper edge until it is fully inserted and, upon insertion, the assembled wedge members will securely position the stretch-resistant plastic layers under the desired tautness for extension across the entire panel. The wedge connector assembly as described will cooperate with the channel extrusion 16 in that as the plastic layers are extended across the assembly and anchored in place any increasing degree of tension applied to the plastic layer will tend to cock or press the channel extrusions inwardly to maintain the desired spacing between the layers. Otherwise if the channels 24 to 27 of the channel extrusion 16 were merely disposed in a common plane, the plastic layers when tightened would cock or cant the extrusion in the opposite direction tending to draw the layers too closely together. Preferably, in the completed assembly an air vent represented at 120 shown in Figures 1 and 2 is formed in the upper end of the channel 16, a side frame assembly 15 adjacent to one of the corners and extends through the housing beneath the channel so as to permit escape of air from the water film into the atmosphere and minimize any bubbling of air entrapment in the water film.

The frame assembly as described also permits utilization of different combinations of flexible layers. For instance, the collector sheet may be either coated or impregnated with a black paint or dye for most efficient heat absorption. The lower air distribution or cushion layer 22 preferably is a Llumar or other polyester sheet to which is applied an aluminized coating 22' which will reflect ultraviolet rays back into the collector sheet. Preferably the upper air distribution or cushion layers are composed of outer Llumar or other polyester transparent layer 20. Llumar is manufactured and sold by Martin Processing, Inc. of Martinsville, Virginia.

In the alternative, it will be readily appreciated that the inner layer 18 of the lower air cushion may serve as the collector sheet, and the first and second layers 19 and 20 will form an air cushion layer so that the water film will pass along the upper surface of the collector sheet 18.

In use, the frame assembly may be constructed of different sizes depending upon its specific application; and while the frame may be of modular construction so as to permit placing together of a series of frame assemblies, it is much preferred to construct the entire assembly of one single frame of the desired size since material costs and assembly costs per square foot of collector surface are substantially reduced as the size of the assembly increases. In a typical installation, some cooling of the water which is stored in the storage tank will be experienced during the night so that when the unit is in operation during the early morning hours the relatively cool water would be pumped from the storage tank through the collector assembly as the collector sheet is being heated by the sun's rays. During each pass, the water circulated from the storage tank may increase in temperature only on the order of 1,7°C (3°F). After continuous recirculation of the water from the tank through the collector assembly, however, the water temperature will be progressively increased throughout the collection hours of the day and the water in the storage tank will therefore become hotter. If no water were circulated through the panel or collector assembly absorber surface, the collector sheet would reach some maximum temperature which would be the absolute upper limit on the temperature of the hot water. In practice the water temperature would always be less than this maximum collector sheet temperature. In accordance with standard practice however heat is being transferred from the collector sheet during the early morning hours at the lower panel temperature when radiation heat losses would be relatively small and collector efficiency the highest. As the water temperature is increased later in the day and the collector sheet is hotter, the collector efficiency will be reduced. Nevertheless by carefully controlling the thickness and uniformity of the film of water between the air cushion layers and at the same time maximizing the rate of flow of water, extremely high heat transfer coefficients are realized, and the collector efficiency averaged over a day should be relatively high. For example, the flow rate of water .0254 cm thick over a panel surface on the order of 6 metres by 1.5 metres in size would be in the range of 26.5 to 30 metres per minute. Most importantly is that while the collector assembly may be prefabricated for installation at a particular site, adjustments in the tension of the layers, thickness of the water film as well as spacing between layers as described, can be readily made to realize maximum efficiency from the system.

## Claims

1. A solar energy collector assembly comprising a flexible collector sheet (19, 18), a flexible intermediate sheet (18, 19) disposed in closely spaced relation to said collector sheet and being co-extensive with and substantially parallel to said collector sheet, water distribution means (54) for evenly distributing water between said collector sheet (19, 18) and said intermediate sheet (18, 19), a first air distribution sheet (20) disposed in closely spaced relation to said collector sheet and being co-extensive with and substantially parallel to that sheet, a second air distribution sheet (22) disposed in closely spaced relationship to the intermediate sheet and being co-extensive with an substantially parallel to that sheet, the collector, intermediate and air distribution sheets being sealed at their edges, air supply means (41, 42) isolated from said water distribution means (54) for passing air under pressure between the two air distribution sheets and the respective adjacent sheets to maintain said sheets at a predetermined pressure whereby water is caused to flow in a thin film evenly past the face of the collector sheet and the intermediate sheet for recovery of heat from the collector sheet and recovery means for removing the fluid after it has passed said collector sheet (18, 19), characterised in that an outer peripheral frame (11) is provided and the collector sheet (19, 18), intermediate sheet (18, 19) and the air distribution sheets (20, 22) are independently secured and sealed at their edges to said frame (11) in predetermined spaced apart relationship and under predetermined tension, and in that the air supply means (41, 42) are associated with said frame (11).

2. A solar energy collector assembly according to claim 1 wherein the force of said air distribution layers against said collector sheet (19) is sufficient to maintain the film of water passing along said collector sheet in the order of 0 to .254 cm thick.

3. A solar energy collector assembly according to claim 1 or claim 2 wherein said collector surface (19) is composed of a flexible, stretch-resistant material with a heat absorbing layer.

4. A solar energy collector assembly according to any of claims 1 to 3, characterised in that one of said air distribution sheets (20, 22) is of a thinner gauge than the other.

5. A solar energy collector assembly according to any of claims 1 to 4 wherein the outer peripheral edges of said collector sheet (19, 18), intermediate sheet (18, 19) and pair of air distribution sheets (20, 22) are flexible, and said securing means is defined by channels (24, 25, 26, 27) formed in said outer peripheral frame (11) and adapted to receive the outer flexible edges of said sheets, and wedge members (30, 22) are releasably inserted into said channels to engage with a wedge action the outer flexible edges of said sheets.

6. A solar energy collector assembly according to claim 5 wherein said channels (24, 25, 26, 27) extend continuously along the periphery of said frame (11), there being a separate channel for each of said air distribution films and said collector sheet.

7. A solar energy collector assembly according to claim 6 wherein each channel (24, 25, 26, 27) is of generally U-shaped cross-sectional configuration and each of said wedge members (30, 32) includes a flexible, generally U-shaped female wedging portion (30) corresponding to the U-shaped cross-sectional configuration of each of said respective channel.

8. A solar energy collector assembly according to claim 7 wherein each edge wedge member (30, 32) includes a male wedging portion (32) insertable into said female wedging portion (30).

## Patentansprüche

1. Sonnenenergiekollektoranordnung mit einer flexiblen Kollektorplatte (19, 18), einer flexiblen Zwischenplatte (18, 19), die in naher Abstandbeziehung zur Kollektorplatte angeordnet ist, die gleiche Erstreckung wie die Kollektor platte hat und im wesentlichen parallel zu ihr ist, mit einer Wasserverteilungseinrichtung (54) zum gleichmäßigen Verteilen von Wasser zwischen der Kollektorplatte (19, 18) und der Zwischenplatte (18, 19), mit einer ersten Luftverteilungsplatte (20), die in naher Abstandsbeziehung zu der Kollektorplatte angeordnet ist und die gleiche Erstreckung wie jene Platte hat und im wesentlichen parallel zu ihr ist, mit einer zweiten Luftverteilungsplatte (22), die in naher Abstandsbeziehung zu der Zwischenplatte angeordnet ist, die gleiche Erstreckung wie jene Platte hat und sich im wesentlichen parallel zu ihr erstreckt, wobei die Kollektorplatte, die Zwischenplatte und die Luftverteilungsplatten an ihren Rändern abgedichtet sind, mit Luftzuführungseinrichtungen (41, 42), die von der Wasserverteilungseinrichtung (54) isoliert sind und für die Führung von unter Druck stehender Luft zwischen den beiden Luftverteilungsplatten und die jeweils angrenzenden Platten dienen, um die Platten auf einen vorher festgelegten Druck zu halten, wodurch Wasser in einem dünnen Film gleichmäßig an der Fläche der Kollektorplatte und der Zwischenplatte vorbeiströmt, wodurch Wärme von der Kollektorplatte gewonnen wird, und mit Gewinnungseinrichtungen zum Entfernen des Fluids, nach dem es die Kollektorplatte (18, 19) passiert hat, dadurch gekennzeichnet, daß ein äußerer Umfangsrahmen (11) vorgesehen ist, daß die Kollektorplatte (19, 18), die Zwischenplatte (18, 19) und die Luftverteilungsplatten (20, 22) mit ihren Rändern an dem Rahmen (11) in einer vorher festgelegten Abstandsbeziehung und unter einer vorher festgelegten Spannung unabhängig befestigt und abgedichtet sind und, daß die Luftzuführungseinrichtungen (41, 42) dem Rahmen (11) zugeordnet sind.

2. Sonnenenergiekollektoranordnung nach Anspruch 1, bei welcher die Kraft der Luftverteilungsschichten gegen die Kollektorplatte (19) ausreicht, um den längs der Kollektorplatte laufenden Wasserfilm in einer Größenordnung von 0 bis 0,254 cm Dicke zu halten.

3. Sonnenenergiekollektoranordnung nach Anspruch 1 oder 2, bei welcher die Kollektoroberfläche (19) aus einem flexiblen, dehnungswiderstandsfähigen Material mit einer wärmeabsorbierenden Schicht zusammengesetzt ist.

4. Sonnenenergiekollektoranordnung nach einem der Ansprüche 1 bis 3, dadurch gekennzeichnet, daß eine der Luftverteilungsplatten (20, 22) eine geringere Stärke als die andere hat.

5. Sonnenenergiekollektoranordnung nach einem der Ansprüche 1 bis 4, bei welcher die äußeren Umfangsränder der Kollektorplatte (19, 18), der Zwischenplatte (18, 19) und des Paares von Luftverteilungsplatten (20, 22) flexibel sind, so daß die Befestigungseinrichtungen von Kanälen (24, 25, 26, 27) gebildet werden, die in dem äußeren Umfangsrahmen (11) ausgebildet sind und dazu dienen, die äußeren flexiblen Ränder der Platten aufzunehmen, und daß Keilelemente (30, 22) lösbar in die Kanäle eingesetzt sind, um mit Keilwirkung an den äußeren flexiblen Rändern der Platten anzugreifen.

6. Sonnenenergiekollektoranordnung nach Anspruch 5, bei welcher sich die Kanäle (24, 25, 26, 27) fortlaufend längs des Umfangs des Rahmens (11) erstrecken, wobei ein gesonderter Kanal für jede der Luftverteilungsfolien und die Kollektorplatte vorgesehen ist.

7. Sonnenenergiekollektoranordnung nach Anspruch 6, bei welcher jeder Kanal (24, 25, 26, 27) insgesamt eine U-förmige Querschnittsform hat und jedes der Keilelemente (30, 32) einen flexiblen, ingesamt U-förmigen weiblichen verkeilenden Abschnitt (30) aufweist, der der U-förmigen Querschnittsform des jeweiligen Kanals entspricht.

8. Sonnenenergiekollektoranordnung nach Anspruch 7, bei welcher jedes Keilelement (30, 32) einen männlichen verkeilenden Abschnitt (32) aufweist, der in den weiblichen verkeilenden Abschnitt (30) einführbar ist.

## Revendications

1. Ensemble collecteur d'énergie solaire comprenant une feuille collectrice flexible (19, 18), une feuille intermédiaire flexible (18, 19) disposée dans une position de faible espacement par rapport à ladite feuille collectrice et de même extension que ladite feuille collectrice tout en étant sensiblement parallèle à celle-ci, un moyen de distribution d'eau (54) pour distribuer également de l'eau entre ladite feuille collectrice (19, 18) et ladite feuille intermédiaire

**0 012 028**

(18, 19), une première feuille de distribution d'air (20) disposée dans une position d'espacement faible par rapport à ladite feuille collectrice et de même extension que celle-ci et sensiblement parallèlement à cette feuille, une seconde feuille de distribution d'air (22) disposée dans une position d'espacement faible par rapport à la feuille intermédiaire et de même extension que celle-ci et sensiblement parallèlement à cette feuille, les feuilles collectrice, intermédiaire et de distribution d'air étant scellées sur leur bord, un moyen de fourniture d'air (41, 42) isolé dudit moyen de distribution d'eau (54) pour faire passer de l'air sous pression entre les deux feuilles de distribution d'air et les feuilles adjacentes respectives de manière à maintenir lesdites feuilles sous une pression prédéterminée de telle sorte que l'eau est forcée de s'écouler en une pellicule fine de façon égale en passant sur la face de la feuille collectrice, de la feuille intermédiaire pour récupérer de la chaleur de la feuille collectrice et d'un moyen de récupération pour enlever le fluide après son passage sur la feuille collectrice (18, 19), caractérisé en ce qu'on prévoit un châssis périphérique externe (11) et que la feuille collectrice (19, 18), la feuille intermédiaire (18, 19) et les feuilles de distribution d'air (20, 22) sont fixées et scellées indépendamment sur leur bord audit châssis (11) dans une position prédéterminée d'espacement et sous une tension prédéterminée et en ce que les moyens de fourniture d'air (41, 42) sont associés audit châssis (11).

2. Ensemble collecteur d'énergie solaire selon la revendication 1, dans lequel la force des couches de distribution d'air contre ladite feuille collectrice (19) est suffisante pour maintenir la pellicule d'eau passant le long de la feuille collectrice avec une épaisseur de l'ordre de 0 à 0,254 cm.

3. Ensemble collecteur d'énergie solaire selon la revendication 1 ou la revendication 2, dans lequel la surface collectrice (19) est composée en une matière flexible résistant à l'étirage et ayant une couche absorbant la chaleur.

4. Ensemble collecteur d'énergie solaire selon l'une quelconque des revendications 1 à 3, caractérisé en ce que l'une des feuilles de distribution d'air (20, 22) est d'un calibre plus fin que l'autre.

5. Ensemble collecteur d'énergie solaire selon l'une quelconque des revendications 1 à 4, dans lequel les bords périphériques externes de ladite feuille collectrice (19, 18), de la feuille intermédiaire (18, 19) et de la paire de feuilles de distribution d'air (20, 22) sont flexibles, et le moyen de fixation est défini par des canaux (24, 25, 26, 27) formés dans ledit châssis périphérique externe (11) et prévus pour recevoir les bords flexibles externes desdites feuilles, et des éléments de coincement (30, 22) sont insérés amoviblement dans lesdits canaux de manière à contacter avec un effet de coincement les bords externes flexibles desdites feuilles.

6. Ensemble collecteur d'énergie solaire selon la revendication 5, dans lequel lesdits canaux (24, 25, 26, 27) s'étendent en continu le long de la périphérie dudit châssis (11), un canal séparé existant pour chacune desdites pellicules de distribution d'air et ladite feuille.

7. Ensemble collecteur d'énergie solaire selon la revendication 6, dans lequel chaque canal (24, 25, 26, 27) est généralement en forme de U en section transversale et chacun des éléments de coincement (30, 32) comporte une portion flexible de coincement femelle généralement en forme de U (30) correspondant à la forme en U en section transversale de chacun desdits canaux respectifs.

8. Ensemble collecteur d'énergie solaire selon la revendication 7, dans lequel chaque élément de coincement de bord (30, 32) comporte une partie mâle de coincement (32) qu'on peut insérer dans la partie femelle de coincement (30).

FIG 1

FIG 2

FIG 3

FIG 4

FIG 5

*Fig. 6*

*Fig. 8*

*Fig. 9*

*Fig. 7*

*Fig. 10*